# EUROPÄISCHE PATENTANMELDUNG

(11) **EP 1 844 894 A1**
(43) Veröffentlichungstag der Anmeldung: **17.10.2007**
(21) Anmeldenummer: 06015703.9
(22) Anmeldetag: 27.07.2006
(51) Int. Cl.: B23K 31/02, B23P 6/00, B23K 35/38, B23K 9/173, B23K 103/06

(54) **Verfahren zum Reparaturschweissen von Gussmaterial mit einem Defekt; Gegenstand aus Gussmaterial mit einem reparierten Teil; diesbezügliche Verwendung einer Schutzgasmischung**

(30) Priorität: 12.04.2006 DE 102006017663
(71) Anmelder: Linde Aktiengesellschaft, 65189 Wiesbaden (DE)
(72) Erfinder: Helgee, Stefan, 115 38 Stockholm (SE); Tani, Jorma, 132 46 Saltsjö-Boo (SE)
(74) Vertreter: Gellner, Bernd

(57) **Zusammenfassung**

Um ein Verfahren zum Reparaturschweißen mindestens eines Gegenstands (100) aus mindestens einem Gussmaterial, insbesondere aus Gusseisen, wobei mindestens ein zumindest partiell fehlerhafter Bereich, insbesondere eine mindestens eine Beschädigung oder mindestens einen Defekt, beispielsweise mindestens eine fehlerhafte Bohrung und/oder mindestens ein fehlerhaftes Gewinde, aufweisende Fläche, des Gegenstands (100) entfernt wird, sowie eine diesbezügliche Verwendung mindestens einer Schutzgasmischung so weiterzubilden, dass Fehler, insbesondere Risse und/oder Spannungen, möglichst vermieden werden, insbesondere dass beim Reparatur- schweißen die Ausbildung von unerwünschten metallurgischen Strukturen, beispielsweise von Karbidzonen, möglichst unterbunden wird, wird vorgeschlagen, dass der entfernte Bereich zumindest partiell durch mindestens ein vom Gussmaterial des Gegenstands (100) verschiedenes Ersatzmaterial (20) ersetzt wird.

## Beschreibung

### Technisches Gebiet

Die vorliegende Erfindung betrifft ein Verfahren zum Reparaturschweißen mindestens eines Gegenstands aus mindestens einem Gussmaterial, insbesondere aus Gusseisen, wobei mindestens ein zumindest partiell fehlerhafter Bereich, insbesondere eine mindestens eine Beschädigung oder mindestens einen Defekt, beispielsweise mindestens eine fehlerhafte Bohrung und/oder mindestens ein fehlerhaftes Gewinde, aufweisende Fläche, des Gegenstands entfernt wird.

Die vorliegende Erfindung betrifft ferner die Verwendung mindestens einer Schutzgasmischung zum Reparaturschweißen mindestens eines zumindest partiell fehlerhaften Bereichs, insbesondere einer mindestens eine Beschädigung oder mindestens einen Defekt, beispielsweise mindestens eine fehlerhafte Bohrung und/oder mindestens ein fehlerhaftes Gewinde, aufweisenden Fläche mindestens eines aus mindestens einem Gussmaterial, insbesondere aus Gusseisen, gefertigten Gegenstands.

### Stand der Technik

Ein Gussmaterial oder Gusswerkstoff, insbesondere Gusseisen, unterscheidet sich in seinen Eigenschaften grundlegend von Nicht-Gussmaterialien und ist im Vergleich zu derartigen Nicht-Gussmaterialien hart und brüchig.

Gussmaterialien oder Gusswerkstoffe können beispielsweise Eisen-Kohlenstoff-Verbindungen sowie Legierungen derartiger Eisen-Kohlenstoff-Verbindungen, insbesondere niedrig legierte Eisen-Kohlenstoff-Verbindungen oder hoch legierte Eisen-Kohlenstoff-Verbindungen, sein.

Beispielsweise ist Stahl eine als Gussmaterial oder Gusswerkstoff einsetzbare Eisen-Kohlenstoff-Verbindung. Als Stahl wird typischerweise ein ohne Nachbehandlung schmiedbarer Eisenwerkstoff mit weniger als zwei Prozent Kohlenstoff bezeichnet.

Ein weiteres Gussmaterial ist Gusseisen, insbesondere duktiles Gusseisen, etwa duktiles Kugelgraphitgusseisen, oder legiertes Gusseisen, etwa hoch legiertes rostfreies Gusseisen.

Gusseisen wird als graues Roheisen im Hochofen erschmolzen und durch Umschmelzen erzeugt. Besondere Merkmale des Gusseisens sind die hohen Gehalte an Kohlenstoff und an Silizium. Typischerweise enthält Gusseisen 3 Gewichtsprozent (Gew.-%) bis 4 Gew.-% Kohlenstoff und 1 Gew.-% bis 3 Gew.-% Silizium sowie 0,2 Gew.-% bis 1 Gew.-% Mangan.

Gussmaterial, insbesondere Gusseisen, liegt in verschiedenen Formen vor, die sich in den Materialeigenschaften unterscheiden. Die verschiedenen Formen des Gussmaterials, insbesondere des Gusseisens, werden durch die Gewichtsanteile der Bestandteile sowie durch Abkühlgeschwindigkeiten nach der Herstellung im Hochofen bestimmt. Bei langsamer Abkühlung von Gussmaterial, insbesondere von Gusseisen, scheidet der gelöste Kohlenstoff als Graphit aus. Die Graphitausscheidung wird durch keimbildende Substanzen und weitere Legierungselemente beeinflusst.

Eine kugelförmige Ausscheidung des Kohlenstoffs wird durch Zugabe von Magnesium oder von Zer, die üblicherweise im Bereich von 0,02 Gew.-% bis 0,7 Gew.-% erfolgt, erreicht. Es entsteht duktiles Gusseisen. Duktiles Gusseisen weist von allen Gusseisenarten die höchste Zugfestigkeit und die größte Bruchfestigkeit auf.

Die den Kohlenstoff umgebende Matrix zeigt eine Mikrostruktur, deren Art von der chemischen Zusammensetzung des Gusseisens, von den Abkühlungsgeschwindigkeiten bei der Herstellung des Gusseisens bzw. von einer Wärmebehandlung des Gusseisens abhängt.

Bei der Herstellung eines Gegenstands aus Gussmaterial, insbesondere aus Gusseisen, können Fehler, insbesondere Beschädigungen oder Defekte, während des Gießens sowie bei der Bearbeitung des Gegenstands auftreten. Beispielsweise können Fehler beim Bohren oder beim Schneiden eines Gewindes in den Gegenstand auftreten. Die fehlerhaften Komponenten oder Gegenstände müssen, sofern sie nicht mittels Schweißen repariert werden können, verschrottet oder wieder eingeschmolzen werden.

Prinzipiell ist, wie etwa in der Druckschrift WO 2004/058441 A2 beschrieben, das Schweißen von Gussmaterialien, wie etwa duktilem Gusseisen, möglich. In der Praxis zeigen sich jedoch insbesondere beim Schweißen von Gusseisen, unter Anderem aufgrund des hohen Kohlenstoffgehalts des Gusseisens, erhebliche Probleme:
Derartige Probleme sind beispielsweise eine unzureichende Verbindung des Gusseisens mit dem zu verbindenden Material sowie das Auftreten von Rissen, insbesondere von Schwindrissen und/oder von zentralen Rissen, an der Schweißstelle. Die Mikrostruktur der Schweißstelle ist nur schwer steuerbar, und die Bearbeitung, beispielsweise das Bohren oder das Schneiden von Gewinden, im Bereich der Schweißstelle ist aufgrund der Härte des Gusseisens erschwert.

Gemäß dem Stand der Technik wird beim Reparaturschweißen von Gussmaterialien wie etwa Gusseisen, sofern Reparaturschweißen von Gussmaterialien überhaupt als möglich erachtet wird, zunächst der fehlerhafte Bereich entfernt und anschließend der gesamte entfernte Bereich mittels Schweißen aufgefüllt. Als Schweißtechnik wird dabei beispielsweise M[anual]M[etal]A[rc], Gas-Schweißen, G[as]M[etal]A[rc]W[elding] und F[lux]C[ored]W[elding] verwendet.

Nachteilig an der bisher bekannten Technik des Reparaturschweißens von Gussmaterialien wie beispielsweise Gusseisen ist, dass dicke spröde oder brüchige Zonen mit hohen Restspannungen auftreten, was zum Aufreißen oder zum Bruch des reparierten Bereichs des Gussmaterials, insbesondere des Gusseisens führt.

Die Ursache hierfür ist, dass Gussmaterial, insbesondere Gusseisen, beim Schweißen in der Schweißzone oder Fusionszone verflüssigt wird und beim Aushärten der Fusionszone eine Karbidstruktur ausbildet. Diese beim Schweißen ausgebildete Karbidzone weist im Vergleich zu nicht geschweißtem Gussmaterial, insbesondere Gusseisen, eine geringere Belastbarkeit oder Härte, insbesondere eine geringere Bruch- und/oder Risszähigkeit, auf.

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, ein Verfahren der eingangs genannten Art sowie eine Verwendung der eingangs genannten Art so weiterzubilden, dass Fehler, insbesondere Risse und/oder Spannungen, möglichst vermieden werden; insbesondere soll beim Reparaturschweißen die Ausbildung von unerwünschten metallurgischen Strukturen, beispielsweise von Karbidzonen, möglichst unterbunden werden.

Diese Aufgabe wird durch ein Verfahren mit den im Anspruch 1 angegebenen Merkmalen sowie durch eine Verwendung mit den im Anspruch 20 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Mithin basiert die vorliegende Erfindung auf einem neuen Verfahren zum Reparieren und/oder zum Instandsetzen eines aus Gussmaterial oder aus Gusswerkstoff, insbesondere aus Gusseisen oder aus Gussstahl oder aus Gussaluminium, gefertigten Gegenstands.

Das Gussmaterial kann beispielsweise mindestens eine Eisen-Kohlenstoff-Verbindung, wie Gusseisen, insbesondere duktiles Gusseisen, zum Beispiel duktiles Kugelgraphitgusseisen, oder legiertes Gusseisen, zum Beispiel niedrig legiertes Gusseisen oder hoch legiertes Gusseisen, sein.

Ein weiteres mögliches Gussmaterial ist Stahl, insbesondere legierter Stahl, zum Beispiel niedrig legierter Stahl oder hoch legierter Stahl.

Ferner kann das Gussmaterial mindestens ein Nichteisenmetall, insbesondere Nickel und/oder Zink und/oder Zinn, und/oder mindestens eine Legierung eines Nichteisenmetalls sein.
Des Weiteren kann das Gussmaterial mindestens ein Leichtmetall, insbesondere Aluminium und/oder Magnesium und/oder Titan, und/oder mindestens eine Legierung eines Leichtmetalls sein.

Die Matrix des Gegenstands kann beispielsweise eine ferritische, ferritisch-perlitische, perlitische oder martensitische Mikrostruktur aufweisen. Dabei kann der Gegenstand beispielsweise ein Bauteil, beispielsweise ein Konstruktions- oder Fertigungsbauteil insbesondere der Automobilindustrie, sein.

Zum Reparieren oder zum Instandsetzen des Gussgegenstands, insbesondere des Gusseisengegenstands, wird gemäß der vorliegenden Erfindung zunächst der zumindest partiell fehlerhafte Bereich entfernt. Dabei wird vorzugsweise der zu entnehmende Bereich so gewählt, dass die durch das Anschweißen gebildete Schweißnaht oder Schweißstelle und somit die möglicherweise beim Anschweißen gebildete Karbidzone in einem weniger kritischen Bereich, insbesondere in einem mechanisch weniger stark beanspruchten Bereich, angeordnet ist. Auf diese Weise kann die Fusionszone (Schweißnaht oder Schweißstelle) dort angeordnet werden, wo sie am wenigsten Schaden verursacht.

Anschließend wird zumindest ein Teil des entfernten Bereichs durch mindestens ein Ersatzmaterial ersetzt; dieses Ersatzmaterial ist zum Gussmaterial des Gegenstands unterschiedlich.

Das Ersatzmaterial kann mindestens ein Nicht-Gusseisenmaterial, insbesondere mindestens ein Nicht-Gussmaterial, oder mindestens ein (vom Gussmaterial des Gegenstands verschiedenes) Gussmaterial sein.

Vorteilhafterweise wird als Ersatzmaterial ein Material gewählt, das sich vom Gussmaterial des Gegenstands unterscheidet, aber dennoch zu diesem Gussmaterial des Gegenstands passt; beispielsweise kann, wenn der Gegenstand im Wesentlichen Gusseisen, insbesondere duktiles Gusseisen, aufweist, das Ersatzmaterial im Wesentlichen Stahl und/oder legierten Stahl, insbesondere niedrig legierten Stahl und/oder hoch legierten Stahl, aufweisen.

Ferner wird, wenn der Gegenstand im Wesentlichen Aluminiumguss oder legierten Aluminiumguss aufweist, zweckmäßigerweise als Ersatzmaterial ein Nicht-Gussmaterial gewählt, das im Wesentlichen Aluminium oder legiertes Aluminium, beispielsweise mit Magnesium legiertes und/oder mit Silizium legiertes Aluminium, aufweist.

Als Ersatzmaterial kann also beispielsweise Stahl, insbesondere ein nicht legierter Stahl, ein niedrig legierter Stahl oder ein hoch legierter Stahl, verwendet werden. Das Ersetzen zumindest eines Teils des entnommenen Bereichs durch Ersatzmaterial, insbesondere durch Nicht-Gussmaterial, etwa durch weichen Stahl, bietet den Vorteil, dass der reparierte Bereich, insbesondere die Ausbesserung, im Vergleich zum Gussgegenstand bessere Bearbeitungseigenschaften aufweist.

Durch den Einsatz von Ersatzmaterial, insbesondere von Nicht-Gusseisenmaterial, beispielsweise von Nicht-Gussmaterial, können somit neue Materialeigenschaften und eine bessere Eignung des Gegenstands für den gewünschten Verwendungszweck erreicht werden.

Durch das zumindest partielle Ersetzen des entnommenen Bereichs durch Ersatzmaterial wird das Volumen der Schweißstelle, insbesondere der Schweißnaht oder der Fusionszone, verringert und somit die Schweißzeit verkürzt. Im Vergleich zum Stand der Technik erfolgt somit beim Anschweißen ein viel geringerer Wärmeeintrag in die Schweißstelle.

Aufgrund des geringeren Wärmeeintrags sowie aufgrund einer Spannungsadsorption im Nichtgussmaterial weist ein nach dem erfindungsgemäßen Verfahren reparierter Gegenstand im Vergleich zu einem nach einem herkömmlichen Verfahren reparierten Gegenstand viel weniger Restspannung auf.

Ferner wird beim Reparaturschweißen gemäß der vorliegenden Erfindung im Vergleich zum Reparaturschweißen nach dem Stand der Technik allenfalls eine Karbidzone mit wesentlich geringerem Volumen gebildet, denn das Volumen der Schweißstelle sowie der Wärmeeintrag in die Schweißstelle sind wesentlich verringert.

Sofern also überhaupt eine Karbidzone ausgebildet wird, ist diese Karbidzone wesentlich schmaler und/oder wesentlich dünner als bei konventionellen Reparaturschweißverfahren. Durch das Verfahren gemäß der vorliegenden Erfindung wird folglich die Bildung von brüchigen und/oder spröden Zonen und somit das Bruchrisiko des reparierten Gegenstands wesentlich reduziert.

Zur Unterstützung des Verbindens des Gussmaterials des Gegenstands mit dem Ersatzmaterial kann, insbesondere in den Bereich zwischen dem an die Leerstelle angrenzenden Gussmaterial und dem in die Leerstelle eingebrachten Ersatzmaterial, mindestens ein Füllmaterial (Füllmetall oder filler metal), insbesondere mindestens ein Schweißzusatzwerkstoff, beispielsweise in Form mindestens einer Drahtelektrode oder in Form mindestens eines Schweißdrahts, etwa in Form mindestens eines Fülldrahts oder in Form mindestens eines Volldrahts, eingebracht werden.

Das Ersetzen zumindest eines Teils des entnommenen Bereichs durch Ersatzmaterial bietet im Vergleich zu Guss-Reparaturschweißverfahren gemäß dem Stand der Technik den Vorteil, dass aufgrund eines geringeren Verbindungsvolumens in der reparierten Schweißverbindung viel weniger Füllmaterial, insbesondere viel weniger Schweißzusatzwerkstoff, benötigt wird.

Vorteilhafterweise entspricht das Füllmaterial im Wesentlichen der chemischen Zusammensetzung des Gussmaterials des Gegenstands. Sofern das Gussmaterial des Gegenstands im Wesentlichen Aluminium und/oder im Wesentlichen legiertes Aluminium aufweist, weist das Füllmaterial geeigneterweise ebenfalls im Wesentlichen Aluminium und/oder im Wesentlichen legiertes Aluminium auf.

Sofern das Gussmaterial des Gegenstands im Wesentlichen mindestens eine, beispielsweise legierte, Eisen-Kohlenstoff-Verbindung, insbesondere Gusseisen und/oder Gussstahl, aufweist, besteht das Füllmaterial zweckmäßigerweise ebenfalls im Wesentlichen aus mindestens einer, beispielsweise legierten, Eisen-Kohlenstoff-Verbindung, insbesondere aus Stahl oder aus legiertem Stahl; beispielsweise kann ein mit Nickel legierter Stahldraht als Füllmaterial verwendet werden.

Hierbei kann ein Vorteil erzielt werden kann, wenn zumindest ein gewisser Teil des Eisens durch Nickel ersetzt wird.

Beim Reparaturschweißen von Gusseisen und/oder von Gussstahl weist eine bevorzugte Ausführungsform des Füllmaterials also einen hohen Anteil an Eisen, insbesondere etwa 10 Gewichtsprozent (Gew.-%) bis etwa 60 Gew.-% Eisen, und einen hohen Anteil an Nickel, insbesondere mindestens etwa 30 Gew.-% Nickel, vorzugsweise mindestens etwa 40 Gew.-% Nickel, beispielsweise mindestens etwa 60 Gew.-% Nickel, auf.

Unabhängig hiervon oder in Verbindung hiermit kann das Füllmaterial
- einen geringen Anteil an Kohlenstoff, insbesondere weniger als etwa 1 Gew.-% Kohlenstoff, und/oder
- einen geringen Anteil an Mangan, insbesondere weniger als etwa 10 Gew.-% Mangan, vorzugsweise weniger als etwa 2 Gew.-% Mangan, und/oder
- einen geringen Anteil an Silizium aufweisen.

Des Weiteren kann das Füllmaterial Legierungselemente und/oder Spurenelemente (trace elements) aufweisen.

Der Mangananteil des Füllmaterials wird möglichst gering gehalten, um eine optimale Bearbeitbarkeit des reparierten Bereichs zu erzielen, beispielsweise um in den mittels Reparaturschweißen ausgebesserten Bereich mindestens ein Gewinde einarbeiten zu können. Drähte mit weniger als etwa 10 Gew.-% Mangan, vorzugsweise mit weniger als etwa 2 Gew.-% Mangan, weisen besonders positive Bearbeitungseigenschaften auf.

Das Füllmaterial wird beim Anschweißen geschmolzen, wobei es zumindest einen Teil seiner Legierungselemente verliert bzw. abgibt. Diese Legierungselemente vermischen sich mit mindestens einem beim Anschweißen schmelzenden Bereich des Gussmaterials und des Ersatzmaterials, insbesondere mit der Schweißnaht oder mit der Schweißstelle.

Diese beim Anschweißen gebildete Fusionszone oder dieser beim Anschweißen schmelzende Bereich des Ersatzmaterials und des an die Leerstelle angrenzenden Gussmaterials, insbesondere die Schweißnaht oder die Schweißstelle, weist in zweckmäßiger Weise nach dem Anschweißen mindestens etwa 10 Gew.-% Nickel, insbesondere mindestens etwa 30 Gew.-% Nickel, und einen geringen Anteil an Mangan, insbesondere weniger als etwa 2 Gew.-% Mangan, auf.

Als Füllmaterial sind beispielsweise verschiedene Schweißdrähte geeignet. Prinzipiell sind alle Schweißdrähte, die konventionellerweise zum (Reparatur-)Schweißen von duktilem Gusseisen verwendet werden, für das erfindungsgemäße Verfahren geeignet.

Vorzugsweise werden Volldrähte oder Fülldrähte als Drahtelektrode verwendet. Die Drahtdurchmesser liegen insbesondere bei etwa 0,8 Millimeter (mm) bis etwa 2,0 Millimeter, vorzugsweise bei etwa 1,0 Millimeter bis etwa 1,6 Millimeter.

Um das Auftreten von Rissen und/oder von Spannungen durch den beim Schweißen auftretenden Wärmeeintrag in das Material zu vermeiden, werden vorteilhafterweise lange andauernde Vorwärm- und Abkühlprozeduren oder an den Schweißvorgang sich anschließende Wärmebehandlungen zumindest des an die Leerstelle angrenzenden Gussmaterials, insbesondere Gusseisens, durchgeführt.

Dies vermindert die Temperaturdifferenz im Gussmaterial, insbesondere Gusseisen, in der Umgebung der Schweißstelle wesentlich und trägt damit zur Unterbindung von Gefügeveränderungen bei. Es werden also Risse und/oder Spannungen unterbunden, und das Gussmaterial, insbesondere Gusseisen, des Gegenstands behält die gewünschte Struktur.

Hierbei wird der Gegenstand, insbesondere der zu reparierende Bereich, vor dem Anschweißen vorzugsweise lokal, etwa eine schmale Zone des Gegenstands, insbesondere das an die Leerstelle angrenzende Gussmaterial, und optionalerweise das Ersatzmaterial, vorzugsweise mit dem Füllmaterial, vorteilhafterweise auf etwa 200 Grad Celsius (°C) bis etwa 420 Grad Celsius, insbesondere auf etwa 250 Grad Celsius bis etwa 370 Grad Celsius, zum Beispiel auf etwa 300 Grad Celsius bis etwa 320 Grad Celsius, erwärmt.

Das Vorwärmen vor dem Schweißvorgang sowie die Wärmebehandlung nach dem Schweißvorgang hängen wesentlich vom Gussmaterial sowie vom Ersatzmaterial ab. Ferner werden diese Parameter aber auch wesentlich vom gewählten Füllmaterial oder vom gewählten Schweißzusatzwerkstoff beeinflusst. Vorteilhafterweise kann auf ein Vorwärmen vor dem Schweißen und/oder auf eine Wärmebehandlung nach dem Schweißen verzichtet werden, indem ein geeignetes Füllmaterial, zum Beispiel ein Füllmaterial der vorstehend dargelegten Art, eingesetzt wird.

Ob ein Vorwärmen der Fusionszone vor dem Schweißvorgang und/oder eine Wärmebehandlung nach dem Schweißvorgang vorteilhaft bzw. erforderlich sind/ist, kann typischerweise mittels einer Formel, der sogenannten Kohlenstoff-Äquivalenz, ermittelt werden. Die Kohlenstoff-Äquivalenz-Formel berücksichtigt beispielsweise verschiedene Legierungselemente der Schweißnaht oder der Schweißstelle.

Eine bessere Zugänglichkeit für den Schweißbrenner und eine bessere Sicht für den Schweißer kann dadurch erreicht werden, dass das Ersatzmaterial in kleinen Anteilen und mehreren Schweißschichten zugegeben wird. Vorteilhafterweise wird also das Ersatzmaterial, insbesondere mit dem Füllmaterial, nacheinander portionsweise, insbesondere in Form mindestens zweier aufeinander folgender Lagen oder Schichten, in die durch Entfernen des zumindest partiell fehlerhaften Bereichs gebildete Leerstelle eingebracht.

Nach einem ersten Schweißgang, insbesondere nach einer ersten Schweißsequenz oder nach einem ersten Schweißzyklus, sollte die Fusionszone (Schweißnaht oder Schweißstelle) vorteilhafterweise auf eine bestimmte Temperatur, die sogenannte Interpass-Temperatur, abkühlen.

Die Interpass-Temperatur zumindest des an die Leerstelle angrenzenden Gussmaterials sowie vorzugsweise des Ersatzmaterials und optionalerweise des Füllmaterials, insbesondere die Interpass-Temperatur der Schweißnaht oder der Schweißstelle, kann geeigneterweise etwa 200 Grad Celsius bis etwa 400 Grad Celsius, insbesondere etwa 250 Grad Celsius bis etwa 350 Grad Celsius, zum Beispiel etwa 300 Grad Celsius, betragen.

Für das Anschweißen des Ersatzmaterials an das an die Leerstelle angrenzende Gussmaterial wird vorzugsweise das in der Druckschrift WO 2004/058441 A2 beschriebene Verfahren zum Lichtbogenschweißen von duktilem Gusseisen an schweißbaren Stahl eingesetzt.

Insbesondere die Ablaufschritte des Schweißvorgangs, die Behandlung des Erwärmens vor und nach dem Schweißvorgang, geeignete Schweißzusatzwerkstoffe und geeignete Schutzgase können der Druckschrift WO 2004/058441 A2 entnommen werden.

Vorteilhafterweise wird beim Anschweißen ein Schutzgas eingesetzt, das Argon und/oder Argon/Helium und/oder Stickstoffmonoxid und/oder geringe Mengen oxidierender Komponenten, wie Kohlendioxid und/oder Sauerstoff, aufweist. Bei Verwendung einer Schutzgasmischung gemäß den Verfahrensansprüchen 10, 11 oder 12 zum Reparaturschweißen zeigen sich die Vorteile des erfindungsgemäßen Verfahrens besonders ausgeprägt.

Zum Reparaturschweißen von im Wesentlichen Eisen aufweisenden Gussmaterialien, insbesondere von Gusseisen und/oder von Gussstahl, wird vorzugsweise ein Schutzgas eingesetzt, das oxidierende Komponenten, wie etwa
- Kohlendioxid, insbesondere in einem Anteilsbereich von 0,5 Volumenprozent (Vol.-%) bis 25 Vol.-%, zum Beispiel von 1 Vol.-% bis 15 Vol.-%, wie etwa von 2 Vol.-% bis 10 Vol.-%, und/oder
- Sauerstoff, insbesondere in einem Anteilsbereich von 0,5 Vol.-% bis 10 Vol.-%, zum Beispiel von 1 Vol.-% bis 3 Vol.-%,
   aufweist und im verbleibenden Volumenanteil Argon und/oder eine Argon-Helium-Mischung und/oder Stickstoffmonoxid umfasst.

Zum Reparaturschweißen von im Wesentlichen Aluminium aufweisenden Gussmaterialien, insbesondere von Gussaluminium, wird zweckmäßigerweise ein Schutzgas eingesetzt, das nur einen geringen Anteil an oxidierenden Komponenten, vorzugsweise keine oxidierenden Komponenten, aufweist und im Wesentlichen Argon und/oder eine Argon-Helium-Mischung und/oder Stickstoffmonoxid aufweist, insbesondere im Wesentlichen aus Argon und/oder aus einer Argon-Helium-Mischung und/oder aus Stickstoffmonoxid besteht.

Zum Anschweißen kann beispielsweise die Technik des Lichtbogenschweißens, insbesondere die Technik des Lichtbogenschweißens mit abschmelzender Elektrode unter Schutzgas, wie etwa des G[as]M[etal]A[rc]W[elding]-Verfahrens, eingesetzt werden.

Bei der Technik des G[as]M[etal]A[rc]-Schweißens können beispielsweise das Impulslichtbogen-Verfahren und/oder das Sprühlichtbogen-Verfahren eingesetzt werden.

In diesem Zusammenhang können auch neuere Techniken, wie etwa Schweißverfahren mit variierbarer Drahtvorschubgeschwindigkeit, insbesondere mit pulsierendem Drahtvorschub und/oder mit negativem pulsierendem Drahtvorschub (, das heißt der Draht wird ein wenig zurückgezogen), eingesetzt werden.

Geeigneterweise wird bei Schweißverfahren mit pulsierendem Drahtvorschub die Geschwindigkeit des Drahtvorschubs in pulsierender Art geändert, wobei wechselweise zwei (oder mehr) unterschiedliche Drahtvorschubgeschwindigkeiten gewählt werden können.

Es ist aber auch möglich, das Ersatzmaterial, insbesondere mit dem Füllmaterial, an das Gussmaterial mittels Metall-Schutzgasschweißen, insbesondere mittels des M[etall]A[ktiv]G[as]-Verfahrens und/oder mittels des M[etall]I[nert]G[as]-Verfahrens, anzuschweißen.

Ferner kann beim Anschweißen auch das M[etal]C[ored]W[ire]-Verfahren und/oder das F[lux]C[ored]W[ire]-Verfahren eingesetzt werden.

Des Weiteren kann zum Anschweißen die Technik des Laser-Schweißens, insbesondere des Laser-Hybridschweißens, beispielsweise des Laser-F[lux]C[ored]W[elding]-Hybridschweißens und/oder des Laser-G[as]M[etal]A[rc]W[elding]-Hybridschweißens und/oder des Laser-M[etall]A[ktiv]G[as]-Hybridschweißens und/oder des Laser-M[etal]C[ored]W[ire]-Hybridschweißens und/oder des Laser-M[etall]I[nert]G[as]-Hybridschweißens, eingesetzt werden.

Beispielsweise wird beim Anschweißen die Temperatur zumindest des an die Leerstelle angrenzenden Gussmaterials sowie optionalerweise auch die Temperatur des Ersatzmaterials, insbesondere die Temperatur der Schweißnaht oder der Schweißstelle, bei mindestens etwa 220 Grad Celsius, insbesondere bei mindestens etwa 260 Grad Celsius, zum Beispiel bei mindestens etwa 300 Grad Celsius, gehalten.

Um den durch das Schweißen bedingten Wärmeeintrag in das Schweißbad und das die Schweißstelle umgebende Material gleichmäßig zu verteilen und somit das Auftreten von Rissen und/oder von Spannungen am reparierten Bereich zu vermeiden, kann das Ersatzmaterial, insbesondere mit dem Füllmaterial, mittels mindestens zweier aufeinander folgender Schweißsequenzen oder Schweißzyklen angeschweißt werden. In Ausgestaltung der vorliegenden Erfindung kann ein verlangsamtes Abkühlen zumindest des mit dem Ersatzmaterial verbundenen Gussmaterials und/oder eine Wärmenachbehandlung nach dem Anschweißen von Vorteil sein.

Beispielsweise kann also der reparierte Gegenstand, insbesondere der reparierte Bereich des Gegenstands, zumindest das an die Leerstelle angrenzende Gussmaterial sowie vorzugsweise das Ersatzmaterial, insbesondere mit dem Füllmaterial, nach dem Anschweißen für etwa zehn Minuten auf Temperaturen zwischen etwa 200 Grad Celsius und etwa 450 Grad Celsius, insbesondere zwischen etwa 250 Grad Celsius und etwa 400 Grad Celsius, zum Beispiel zwischen etwa 300 Grad Celsius und etwa 350 Grad Celsius, erwärmt werden.

Unabhängig von der Wärmenachbehandlung oder im Anschluss an diese Wärmenachbehandlung wird der reparierte Gegenstand, insbesondere der reparierte Bereich des Gegenstands, zumindest das an die Leerstelle angrenzende Gussmaterial sowie vorzugsweise das Ersatzmaterial, insbesondere mit dem Füllmaterial, beispielsweise mittels Luftkühlung abgekühlt.

Dabei wird beispielsweise in mindestens einem ersten Abkühlschritt auf etwa 200 Grad Celsius bis etwa 280 Grad Celsius, insbesondere auf etwa 230 Grad Celsius bis etwa 250 Grad Celsius, abgekühlt und diese Temperatur für etwa fünf Minuten gehalten. Im Anschluss hieran kann beispielsweise in mindestens einem zweiten Abkühlschritt mittels Luftkühlung auf etwa 150 Grad Celsius bis etwa 250 Grad Celsius, insbesondere auf etwa 200 Grad Celsius, abgekühlt werden.

Zumindest der reparierte Bereich des Gegenstands, insbesondere das an die Leerstelle angrenzende Gussmaterial, wird nach dem Anschweißen, insbesondere nach der Luftkühlung auf etwa 200 Grad Celsius, langsam, insbesondere verlangsamt, auf Raumtemperatur abgekühlt. Ein langsames oder verlangsamtes Abkühlen, das vorzugsweise durch Imprägnieren, beispielsweise durch Einbetten in Kieselguhr, erreicht wird, ist gegenüber dem Abkühlen an Luft von Vorteil, denn dies verbessert die Eigenschaften der Schweißverbindung.

Aufgrund des im Vergleich zum Stand der Technik geringen Wärmeeintrags beim Reparaturschweißen gemäß der vorliegenden Erfindung sowie aufgrund der vorteilhafterweise gewählten Schweißparameter, wie etwa Vorwärmen, Wärmenachbehandlung, definiertes Abkühlen, gemäß der vorstehend dargelegten Art sowie der vorteilhaften Schutzgasmischung gemäß der vorstehend dargelegten Art wird die Ausbildung von nicht gewollten metallurgischen Strukturen oder von nicht gewollten Gefügeveränderungen im Gussgegenstand wesentlich vermindert; beispielsweise wird mittels des erfindungsgemäßen Verfahrens beim Reparaturschweißen von duktilem Gusseisen und weichem Stahl eine allenfalls halb so breite Karbidzone gebildet wie bei herkömmlichen Schweißverfahren.

Ferner wird zum Reparieren des Gegenstands aufgrund des geringeren Verbindungsvolumens (joint volume) und der geringeren Schweißprozedur weniger Zeit benötigt. Die Ausmusterung von beschädigten Gusskomponenten wird somit vermieden. Folglich ist das erfindungsgemäße Verfahren wesentlich produktiver, reduziert im Vergleich zu konventionellen Reparaturschweißverfahren Kosten und erhöht den Profit.

Die vorliegende Erfindung betrifft ferner einen aus Gussmaterial, insbesondere aus Gusseisen, gefertigten Gegenstand, insbesondere ein Bauteil, beispielsweise ein Konstruktions- oder Fertigungsbauteil, bei weichem Gegenstand mindestens ein zumindest partiell fehlerhafter Bereich, insbesondere eine mindestens eine Beschädigung oder mindestens einen Defekt, beispielsweise mindestens eine fehlerhafte Bohrung und/oder mindestens ein fehlerhaftes Gewinde, aufweisende Fläche, nach einem Verfahren gemäß der vorstehend dargelegten Art repariert ist.

Die vorliegende Erfindung betrifft schließlich die Verwendung mindestens einer Schutzgasmischung zum Reparaturschweißen mindestens eines zumindest partiell fehlerhaften Bereichs, insbesondere einer mindestens eine Beschädigung oder mindestens einen Defekt, beispielsweise mindestens eine fehlerhafte Bohrung und/oder mindestens ein fehlerhaftes Gewinde, aufweisenden Fläche mindestens eines aus mindestens einem Gussmaterial, insbesondere aus Gusseisen, gefertigten Gegenstands nach einem Verfahren gemäß der vorstehend dargelegten Art, wobei die Schutzgasmischung
- im Wesentlichen Argon und/oder eine Argon-Helium-Mischung und/oder Stickstoffmonoxid umfasst und beispielsweise des Weiteren
- oxidierende Komponenten, wie etwa
   -- Kohlendioxid, insbesondere in einem Anteilsbereich von 0,5 Volumenprozent (Vol.-%) bis 25 Vol.-%, zum Beispiel von 1 Vol.-% bis 15 Vol.-%, wie etwa von 2 Vol.-% bis 10 Vol.-%, und/oder
   -- Sauerstoff, insbesondere in einem Anteilsbereich von 0,5 Vol.-% bis 10 Vol.-%, zum Beispiel von 1 Vol.-% bis 3 Vol.-%,
aufweist.

Hierbei kann die Schutzgasmischung vorzugsweise 10 Vol.-% bis 60 Vol.-% Helium, insbesondere 20 Vol.-% bis 50 Vol.-% Helium, zum Beispiel 30 Vol.-% bis 40 Vol.-% Helium, enthalten.

Ferner kann das vorstehend beschriebene Verfahren auch zum Produktionsschweißen, beispielsweise zum Verbinden des Gussgegenstands mit mindestens einem weiteren Gegenstand aus einem Material, das sich vom Gussmaterial des Gussgegenstands unterscheidet, insbesondere mit mindestens einem Nicht-Gusseisengegenstand, eingesetzt werden.

Dies kann insbesondere interessant sein, wenn in einem bestimmten Bereich eines Gussgegenstands spezielle, vom Gussmaterial des Gegenstands unterschiedliche Materialeigenschaften erwünscht sind; beispielsweise kann es wünschenswert sein, in ein Gussmaterial ein zweites, sich vom Gussmaterial unterscheidendes Material einzubauen.

### Kurze Beschreibung der Zeichnungen

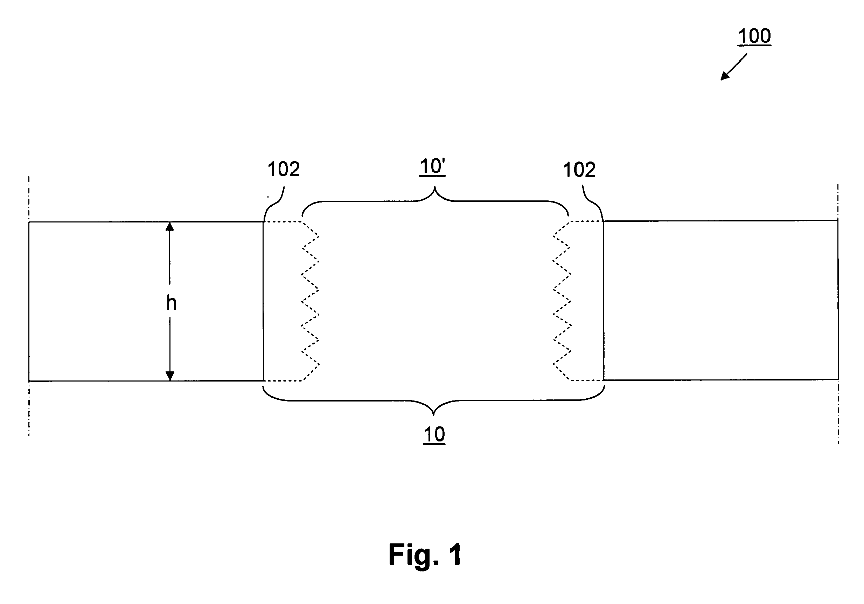

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 sowie dem Anspruch 20 nachgeordneten Ansprüche verwiesen, andererseits werden weitere Ausgestaltungen, Merkmale und Vorteile der vorliegenden Erfindung nachstehend unter Anderem anhand des durch Fig. 1 bis Fig. 4B veranschaulichten Ausführungsbeispiels näher erläutert.

Es zeigt:
- Fig. 1: in schematischer Schnittdarstellung ein Ausführungsbeispiel für einen Gegenstand gemäß der vorliegenden Erfindung, der nach dem Verfahren gemäß der vorliegenden Erfindung repariert wird, wobei insbesondere der zumindest partiell fehlerhafte Bereich entnommen wird;
- Fig. 2: in schematischer Schnittdarstellung den Gegenstand aus Fig. 1, der nach dem Verfahren gemäß der vorliegenden Erfindung repariert wird, wobei insbesondere Ersatzmaterial in die durch Entfernen des zumindest partiell fehlerhaften Bereichs gebildete Leerstelle eingebracht wird;
- Fig. 3: in weiter schematisierter Querschnittdarstellung den Gegenstand aus Fig. 1, der nach dem Verfahren gemäß der vorliegenden Erfindung repariert wird, wobei insbesondere der Ablauf dreier aufeinander folgender Schweißsequenzen gezeigt ist;
- Fig. 4A: eine photographische Darstellung der Oberseite des Gegenstands aus Fig. 1, der nach dem Verfahren gemäß der vorliegenden Erfindung repariert ist; und
- Fig. 4B: eine photographische Darstellung der Unterseite des Gegenstands aus Fig. 4A, der nach dem Verfahren gemäß der vorliegenden Erfindung repariert ist.

Gleiche oder ähnliche Ausgestaltungen, Elemente oder Merkmale sind in Fig. 1 bis Fig. 4B mit identischen Bezugszeichen versehen.

### Bester Weg zur Ausführung der vorliegenden Erfindung

Im anhand der Fig. 1 bis Fig. 4B veranschaulichten Ausführungsbeispiel der vorliegenden Erfindung ist ein Ausschnitt eines aus Gussmaterial, nämlich aus Gusseisen, insbesondere aus duktilem Gusseisen, beispielsweise aus duktilem Kugelgraphitgusseisen, gefertigten Gegenstands 100, nämlich eines Bauteils, gezeigt.

Wie in Fig. 1 dargestellt, wird ein fehlerhafter Bereich, nämlich ein beschädigtes Gewinde 10' des Bauteils 100 mittels des Verfahrens der vorliegenden Erfindung repariert.

Dabei wird zunächst ein Bereich 10 mit einem größeren Durchmesser als der ursprüngliche fehlerhafte Bereich 10' entnommen, was im in Fig. 1 dargestellten Ausführungsbeispiel durch Bohren eines größeren Bohrlochs als des ursprünglichen Bohrlochs geschieht.

Auf diese Weise wird die Zone des an die durch Entfernen des partiell fehlerhaften Bereichs 10 gebildete Leerstelle angrenzenden Gusseisens 102, also die beim Schweißen durch Wärmeeintrag beeinflusste Zone des Gusseisengegenstands 100 verlagert.

Die Fusionszone 30 (Schweißnaht oder Schweißstelle) kann so an Stellen verlagert werden, an die weniger kritische Anforderungen, insbesondere hinsichtlich Bruchfestigkeit oder hinsichtlich Risszähigkeit, gestellt werden. Ferner kann auf diese Weise ein harter Bereich in der Wärmeeinflusszone zur besseren Bearbeitbarkeit entfernt werden.

Eine exemplarische Höhe h des Gegenstands beträgt etwa fünfzehn Millimeter; eine exemplarische Breite des entnommenen Bereichs 10 beträgt etwa vierzig Millimeter.

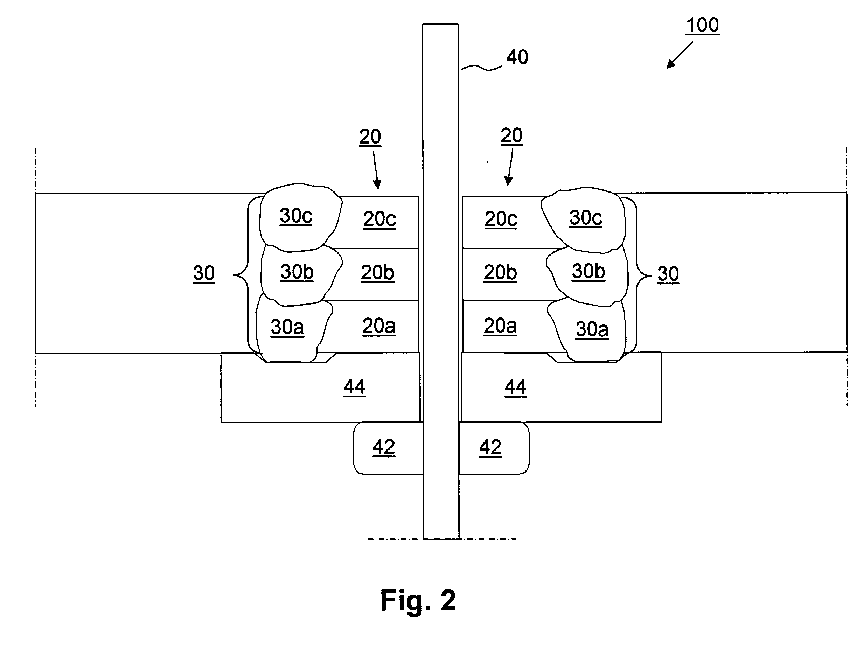

Wie in Fig. 2 dargestellt, wird der entfernte Bereich 10 durch mindestens ein vom Gussmaterial des Gegenstands 100 verschiedenes Ersatzmaterial 20 ersetzt. Um den Wärmeeintrag und das Volumen der Schweißnaht oder Schweißstelle 30 möglichst gering zu halten, wird als Ersatzmaterial 20 weicher Stahl eingesetzt.

Dabei werden Stahlscheiben 20a, 20b, 20c in die Leerstelle gegeben und nacheinander an das an die Leerstelle angrenzende Gusseisen 102 angeschweißt. Auf diese Weise werden ein beim Anschweißen erfolgender Wärmeeintrag sowie das Volumen der beim Anschweißen gebildeten Schweißnaht oder Schweißstelle 30 minimiert. Des Weiteren ist auf diese Weise die Schweißnaht oder Schweißstelle 30 für das Schweißgerät besser zugänglich.

In den Stahl 20 wird eine neue, fehlerfreie Bohrung oder ein neues, fehlerfreies Gewinde eingearbeitet. In diese Bohrung oder in dieses Gewinde ist in Fig. 2 ein Gewindestange 40 oder ein Schraubenbolzen eingeschraubt. Die Gewindestange 40 ist mit einer mit einem korrespondierenden Gewinde versehenen Schraubenmutter 42 verbunden.

Die Gewindestange 40 dient dazu, eine als Stützmaterial oder als Verstärkung, insbesondere als Beilagscheibe oder als Unterlegscheibe, dienende Scheibe 44 und/oder die Stahlscheiben 20a, 20b, 20c zu zentrieren.

Nach dem Anschweißen werden die Gewindestange 40 und die Schraubenmutter 42 und anschließend die Scheibe 44 entfernt. Daraufhin wird ein neues, fehlerfreies Loch gebohrt und/oder ein neues, fehlerfreies Gewinde gefertigt.

Die Anordnung oder Positionierung der fehlerfreien Bohrung oder des fehlerfreien Gewindes wird derart gewählt, dass die fehlerfreie Bohrung oder das fehlerfreie Gewinde durch das Schweißgut führt; dies ist jedoch nicht obligatorisch.

Die Scheibe 44 verhindert, dass das beim Anschweißen verflüssigte Gussmaterial und das Ersatzmaterial 20, also das Material der Fusionszone 30, wegfließt. Ferner dient die Scheibe 44 dazu, die Gewindestange 40 zu zentrieren. Um die Scheibe 44 nach dem Anschweißen leicht wieder entfernen zu können, ist die Scheibe 44 vorteilhafterweise aus Keramik oder aus Kupfer.

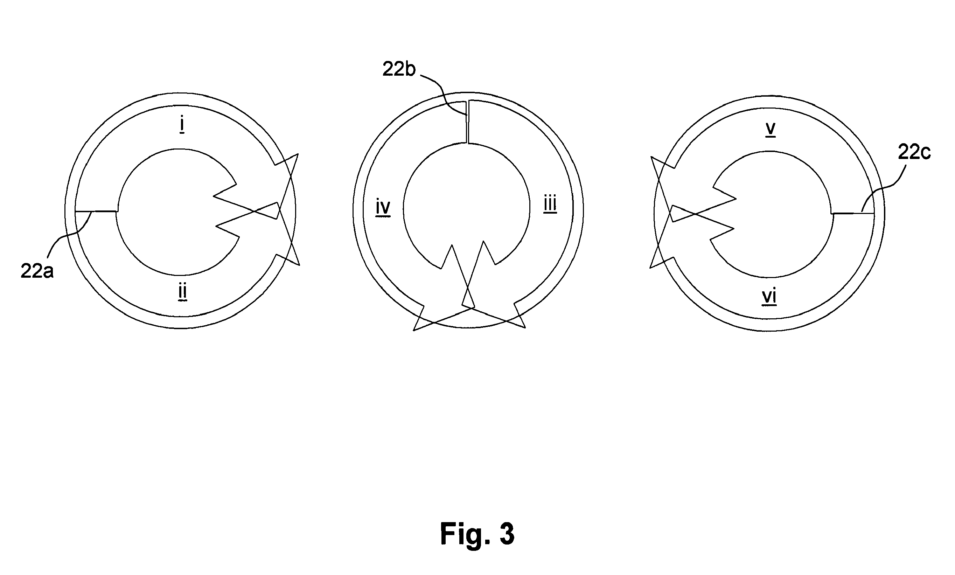

Wie in Fig. 3 dargestellt, wird das Anschweißen in aufeinander folgenden Sequenzen i, ii, iii, iv, v, vi ausgeführt, damit der Wärmeeintrag im Wesentlichen gleichmäßig verteilt und die Restspannung der beim Schweißen durch Wärmeeintrag beeinflussten Zone 102 des Gusseisengegenstands 100 minimiert wird.

Aus dem gleichen Grund werden vorteilhafterweise die Ansatzstellen 22a, 22b, 22c aufeinander folgender Schweißsequenzen räumlich versetzt zueinander angeordnet.

Durch unterschiedliche Wärmebehandlung(en) sowie durch unterschiedliche Schweißparameter können die Mikrostrukturen sowie die Härteprofile der jeweiligen Schweißstelle 30a, 30b, 30c beeinflusst werden. Im Folgenden werden beispielhaft einige vorteilhafte Wärmebehandlungen und Schweißparameter genannt.

Vor dem Anschweißen wird zumindest die beim Anschweißen durch Wärmeeintrag beeinflusste Zone 102 des Gusseisengegenstands 100 auf beispielsweise etwa 300 Grad Celsius bis etwa 320 Grad Celsius vorgewärmt.

Die Interpass-Temperatur beträgt beispielsweise etwa 300 Grad Celsius.

Nach dem Anschweißen wird zumindest die beim Anschweißen durch Wärmeeintrag beeinflusste Zone 102 des Gusseisengegenstands 100 für etwa zehn Minuten auf etwa 300 Grad Celsius bis etwa 350 Grad Celsius erwärmt.

Nach dieser Wärmebehandlung wird zumindest die beim Anschweißen durch Wärmeeintrag beeinflusste Zone 102 des Gusseisengegenstands 100 mittels Luftkühlung auf etwa 230 Grad Celsius bis etwa 250 Grad Celsius abgekühlt, und diese Temperatur wird für etwa fünf Minuten gehalten.

Im Anschluss hieran wird zumindest die beim Anschweißen durch Wärmeeintrag beeinflusste Zone 102 des Gusseisengegenstands 100 mittels Luftkühlung auf etwa 200 Grad Celsius abgekühlt.

Die Abkühlung von 200 Grad Celsius auf Raumtemperatur erfolgt sehr langsam und wird beispielsweise durch Isolieren des Gegenstands 100 verzögert.

Ein nach dem vorstehend beschriebenen Verfahren reparierter Gegenstand 100 weist allenfalls eine sehr dünne spröde Zone oder Bruchfläche sowie allenfalls eine geringe Restspannung in der Schweißnaht 30 auf. Somit weist dieser Gegenstand 100 im Vergleich zu einem nach einem herkömmlichen Schweißverfahren reparierten Gegenstand ein wesentlich vermindertes Bruchrisiko auf.

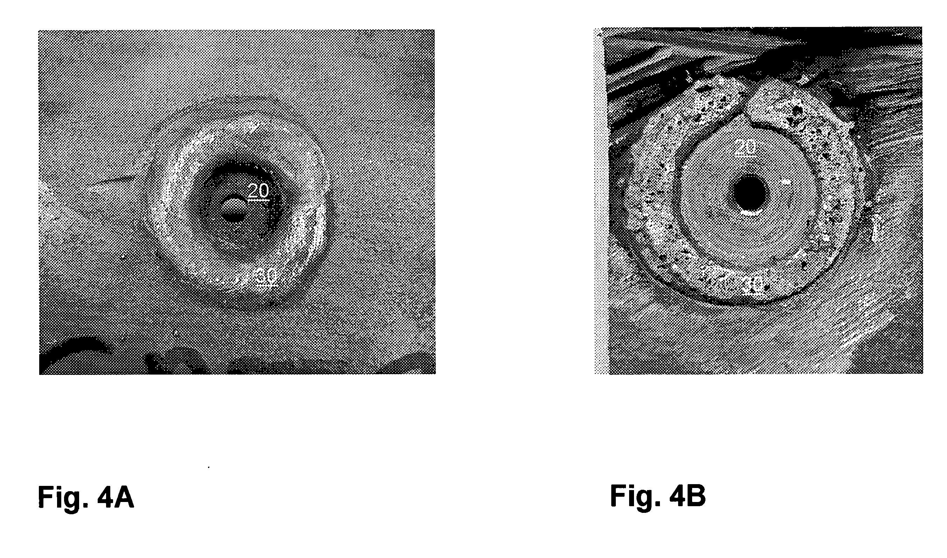

Fig. 4A zeigt eine Photographie der Oberseite des Gegenstands aus Fig. 1, der nach dem Verfahren gemäß der vorliegenden Erfindung repariert wurde.

Fig. 4B zeigt eine Photographie der Unterseite des Gegenstands aus Fig. 4A, wobei sich insbesondere das typische Erscheinungsbild bei Verwendung von Kupfer als Stützmaterial 44 zeigt.

### Bezugszeichenliste

- 100: Gegenstand, insbesondere Bauteil oder Werkstück, etwa Fertigungsbauteil oder Konstruktionsbauteil, aus Gussmaterial, insbesondere aus Gusseisen und/oder aus Gussstahl und/oder aus Gussaluminium
- 102: an Leerstelle angrenzendes Gussmaterial, insbesondere beim Schweißen durch Wärmeeintrag beeinflusste Zone des Gegenstands 100
- 10: zumindest partiell fehlerhafter Bereich, insbesondere eine Beschädigung oder einen Defekt, beispielsweise eine fehlerhafte Bohrung und/oder ein fehlerhaftes Gewinde, aufweisende Fläche
- 10': fehlerhafter Bereich, insbesondere Beschädigung oder Defekt, beispielsweise fehlerhafte Bohrung und/oder fehlerhaftes Gewinde
- 20: Ersatzmaterial, insbesondere Nicht-Gusseisenmaterial, beispielsweise Nicht-Gussmaterial, oder vom Gussmaterial des Gegenstands 100 verschiedenes Gussmaterial, beispielsweise Stahl oder Aluminium, welches Ersatzmaterial in nicht legierter Form, in niedrig legierter Form oder in hoch legierter Form vorliegen kann
- 20a: erste Portion, insbesondere erste Lage oder erste Schicht, des Ersatzmaterials 20
- 20b: zweite Portion, insbesondere zweite Lage oder zweite Schicht, des Ersatzmaterials 20
- 20c: dritte Portion, insbesondere dritte Lage oder dritte Schicht, des Ersatzmaterials 20
- 22a: Ansatzstelle, insbesondere Ansatzpunkt, der (An-)Schweißsequenzen i, ii der ersten Portion 20a des Ersatzmaterials 20
- 22b: Ansatzstelle, insbesondere Ansatzpunkt, der (An-)Schweißsequenzen iii, iv der zweiten Portion 20b des Ersatzmaterials 20
- 22c: Ansatzstelle, insbesondere Ansatzpunkt, der (An-)Schweißsequenzen v, vi der dritten Portion 20c des Ersatzmaterials 20
- 30: beim Anschweißen gebildete Fusionszone oder geschmolzener (Übergangs-)Bereich, insbesondere Schweißnaht oder Schweißstelle, zwischen Ersatzmaterial 20 und an die Leerstelle angrenzendem Gussmaterial 102
- 30a: beim Anschweißen gebildete Fusionszone oder geschmolzener (Übergangs-)Bereich, insbesondere Schweißnaht oder Schweißstelle, zwischen erster Portion 20a des Ersatzmaterials 20 und an die Leerstelle angrenzendem Gussmaterial 102
- 30b: beim Anschweißen gebildete Fusionszone oder geschmolzener (Übergangs-)Bereich, insbesondere Schweißnaht oder Schweißstelle, zwischen zweiter Portion 20b des Ersatzmaterials 20 und an die Leerstelle angrenzendem Gussmaterial 102
- 30c: beim Anschweißen gebildete Fusionszone oder geschmolzener (Übergangs-)Bereich, insbesondere Schweißnaht oder Schweißstelle, zwischen dritter Portion 20c des Ersatzmaterials 20 und an die Leerstelle angrenzendem Gussmaterial 102
- 40: Gewindestange, insbesondere Schraubenbolzen
- 42: Schraubenmutter
- 44: Verstärkung oder Stützmaterial, insbesondere Beilagscheibe oder Unterlegscheibe, beispielsweise aus Keramik und/oder aus Kupfer

- i: erste (An-)Schweißsequenz
- ii: zweite (An-)Schweißsequenz
- iii: dritte (An-)Schweißsequenz
- iv: vierte (An-)Schweißsequenz
- v: fünfte (An-)Schweißsequenz
- vi: sechste (An-)Schweißsequenz

## Patentansprüche

1. Verfahren zum Reparaturschweißen mindestens eines Gegenstands (100) aus mindestens einem Gussmaterial, insbesondere aus Gusseisen, wobei
- mindestens ein zumindest partiell fehlerhafter Bereich (10), insbesondere eine mindestens eine Beschädigung oder mindestens einen Defekt, beispielsweise mindestens eine fehlerhafte Bohrung und/oder mindestens ein fehlerhaftes Gewinde, aufweisende Fläche, des Gegenstands entfernt wird und
- der entfernte Bereich (10) zumindest partiell durch mindestens ein vom Gussmaterial des Gegenstands (100) verschiedenes Ersatzmaterial (20) ersetzt wird.

2. Verfahren gemäß Anspruch 1, **dadurch gekennzeichnet, dass** das Ersatzmaterial (20)
- in die durch Entfernen des zumindest partiell fehlerhaften Bereichs (10) gebildete Leerstelle eingebracht und
- an das an die Leerstelle angrenzende Gussmaterial (102) angeschweißt wird.

3. Verfahren gemäß Anspruch 1 oder 2, **dadurch gekennzeichnet, dass** zum Verbinden und/oder zum Unterstützen des Verbindens des Gussmaterials des Gegenstands (100) mit dem Ersatzmaterial (20), insbesondere in den Bereich zwischen dem an die Leerstelle angrenzenden Gussmaterial (102) und dem in die Leerstelle eingebrachten Ersatzmaterial (20), mindestens ein Füllmaterial, insbesondere mindestens ein Schweißzusatzwerkstoff, beispielsweise in Form mindestens einer Drahtelektrode oder in Form mindestens eines Schweißdrahts, etwa in Form mindestens eines Fülldrahts oder in Form mindestens eines Volldrahts, eingebracht und beim Anschweißen geschmolzen wird.

4. Verfahren gemäß Anspruch 3, **dadurch gekennzeichnet, dass** das Füllmaterial, insbesondere beim Reparaturschweißen von Gusseisen und/oder von Gussstahl,
- im Wesentlichen Stahl, insbesondere legierten Stahl, beispielsweise mit Nickel legierten Stahl, umfasst und/oder
- einen hohen Anteil an Nickel, beispielsweise mindestens etwa 30 Gewichtsprozent (Gew.-%) Nickel, vorzugsweise mindestens etwa 40 Gew.-% Nickel, beispielsweise mindestens etwa 60 Gew.-% Nickel, und/oder
- einen geringen Anteil an Mangan, insbesondere weniger als etwa 10 Gew.-% Mangan, vorzugsweise weniger als etwa 2 Gew.-% Mangan, aufweisen kann.

5. Verfahren gemäß mindestens einem der Ansprüche 1 bis 4, **dadurch gekennzeichnet, dass** das Ersatzmaterial (20), insbesondere mit dem Füllmaterial, nacheinander portionsweise (20a, 20b, 20c), insbesondere in Form mindestens zweier aufeinander folgender Lagen oder Schichten, eingebracht wird.

6. Verfahren gemäß mindestens einem der Ansprüche 1 bis 5, **dadurch gekennzeichnet, dass** zumindest das an die Leerstelle angrenzende Gussmaterial (102) vor dem Anschweißen auf etwa 200 Grad Celsius (°C) bis etwa 420 Grad Celsius, insbesondere auf etwa 250 Grad Celsius bis etwa 370 Grad Celsius, zum Beispiel auf etwa 300 Grad Celsius bis etwa 320 Grad Celsius, erwärmt wird.

7. Verfahren gemäß mindestens einem der Ansprüche 1 bis 6, **dadurch gekennzeichnet,**
- **dass** die Interpass-Temperatur zumindest des an die Leerstelle angrenzenden Gussmaterials etwa 200 Grad Celsius bis etwa 400 Grad Celsius, insbesondere etwa 250 Grad Celsius bis etwa 350 Grad Celsius, zum Beispiel etwa 300 Grad Celsius, beträgt und/oder
- **dass** die Temperatur zumindest des an die Leerstelle angrenzenden Gussmaterials beim Anschweißen mindestens etwa 220 Grad Celsius, insbesondere mindestens etwa 260 Grad Celsius, zum Beispiel mindestens etwa 300 Grad Celsius, beträgt.

8. Verfahren gemäß mindestens einem der Ansprüche 1 bis 7, **dadurch gekennzeichnet, dass** das Anschweißen des Ersatzmaterials (20) an das an die Leerstelle angrenzende Gussmaterial (102) derart erfolgt, dass ein beim Anschweißen erfolgender Wärmeeintrag im Wesentlichen gleichmäßig verteilt wird, insbesondere dass das Ersatzmaterial (20), gegebenenfalls mit dem Füllmaterial, mittels mindestens zweier aufeinander folgender Schweißsequenzen (i, ii, iii, iv, v, vi) angeschweißt wird, wobei die Ansatzstellen (22a bzw. 22b bzw. 22c) jeweils aufeinander folgender Schweißsequenzen (i, ii bzw. iii, iv bzw. v, vi) räumlich versetzt zueinander angeordnet werden.

9. Verfahren gemäß mindestens einem der Ansprüche 1 bis 8, **dadurch gekennzeichnet, dass** das Ersatzmaterial (20) an das an die Leerstelle angrenzende Gussmaterial (102)
- mittels Lichtbogenschweißens, insbesondere mit abschmelzender Elektrode unter Schutzgas, beispielsweise mittels des G[as]M[etal]A[rc]W[elding]-Verfahrens, etwa mittels des Impulslichtbogen-Verfahrens und/oder mittels des Sprühlichtbogen-Verfahrens, und/oder
- mittels Metall-Schutzgasschweißens, insbesondere mittels des M[etall]A[ktiv]G[as]-Verfahrens und/oder mittels des M[etall]I[nert]G[as]-Verfahrens, und/oder
- mittels des M[etal]C[ored]W[ire]-Verfahrens und/oder
- mittels des F[lux]C[ored]W[ire]-Verfahrens und/oder
- mittels Laser-Schweißens, insbesondere mittels Laser-Hybridschweißens, beispielsweise mittels Laser-F[lux]C[ored]W[elding]-Hybridschweißens und/oder mittels Laser-G[as]M[etal]A[rc]W[elding]-Hybridschweißens und/oder mittels Laser-M[etall]A[ktiv]G[as]-Hybridschweißens und/oder mittels Laser-M[etal]C[ored]W[ire]-Hybridschweißens und/oder mittels Laser-M[etall]I[nert]G[as]-Hybridschweißens und/oder
- mittels mindestens eines Schweißverfahrens mit variierbarer Drahtvorschubgeschwindigkeit, insbesondere mittels mindestens eines Schweißverfahrens mit pulsierendem Drahtvorschub und/oder mit negativem pulsierendem Drahtvorschub,
angeschweißt wird.

10. Verfahren gemäß mindestens einem der Ansprüche 1 bis 9, **dadurch gekennzeichnet,**
- **dass** beim Anschweißen Schutzgas eingesetzt wird und
- **dass** das Schutzgas im Wesentlichen Argon und/oder eine Argon-Helium-Mischung und/oder Stickstoffmonoxid aufweist.

11. Verfahren gemäß Anspruch 10, **dadurch gekennzeichnet, dass** das Schutzgas oxidierende Komponenten, wie etwa
- Kohlendioxid, insbesondere in einem Anteilsbereich von 0,5 Volumenprozent (Vol.-%) bis 25 Vol.-%, zum Beispiel von 1 Vol.-% bis 15 Vol.-%, wie etwa von 2 Vol.-% bis 10 Vol.-%, und/oder
- Sauerstoff, insbesondere in einem Anteilsbereich von 0,5 Vol.-% bis 10 Vol.-%, zum Beispiel von 1 Vol.-% bis 3 Vol.-%,
aufweist und im verbleibenden Volumenanteil Argon und/oder eine Argon-Helium-Mischung und/oder Stickstoffmonoxid umfasst.

12. Verfahren gemäß Anspruch 10 oder 11, **dadurch gekennzeichnet, dass** das Schutzgas 10 Vol.-% bis 60 Vol.-% Helium, insbesondere 20 Vol.-% bis 50 Vol.-% Helium, zum Beispiel 30 Vol.-% bis 40 Vol.-% Helium, enthält.

13. Verfahren gemäß mindestens einem der Ansprüche 1 bis 12, **dadurch gekennzeichnet, dass** zumindest das an die Leerstelle angrenzende Gussmaterial (102) nach dem Anschweißen, insbesondere für etwa zehn Minuten, auf Temperaturen zwischen etwa 200 Grad Celsius und etwa 450 Grad Celsius, insbesondere zwischen etwa 250 Grad Celsius und etwa 400 Grad Celsius, zum Beispiel zwischen etwa 300 Grad Celsius und etwa 350 Grad Celsius, erwärmt wird.

14. Verfahren gemäß mindestens einem der Ansprüche 1 bis 13, **dadurch gekennzeichnet, dass** zumindest das an die Leerstelle angrenzende Gussmaterial (102) nach dem Anschweißen, insbesondere nach dem Erwärmen auf Temperaturen zwischen etwa 300 Grad Celsius und etwa 350 Grad Celsius,
- mittels Luftkühlung abgekühlt wird, wobei insbesondere
-- in mindestens einem ersten Abkühlschritt auf etwa 200 Grad Celsius bis etwa 280 Grad Celsius, insbesondere auf etwa 230 Grad Celsius bis etwa 250 Grad Celsius, abgekühlt wird,
-- diese Temperatur von etwa 200 Grad Celsius bis etwa 280 Grad Celsius, insbesondere von etwa 230 Grad Celsius bis etwa 250 Grad Celsius, für etwa fünf Minuten gehalten wird und
-- in mindestens einem zweiten Abkühlschritt auf etwa 150 Grad Celsius bis etwa 250 Grad Celsius, insbesondere auf etwa 200 Grad Celsius, abgekühlt wird, und/oder
- langsam auf Raumtemperatur abgekühlt werden.

15. Verfahren gemäß mindestens einem der Ansprüche 1 bis 14, **dadurch gekennzeichnet, dass** das Gussmaterial im Wesentlichen
- mindestens eine, beispielsweise legierte, etwa niedrig legierte oder hoch legierte, Eisen-Kohlenstoff-Verbindung, insbesondere
-- Gusseisen, zum Beispiel duktiles Gusseisen, etwa duktiles Kugelgraphitgusseisen, und/oder
-- Gussstahl, und/oder
- mindestens ein Nichteisenmetall, insbesondere Nickel und/oder Zink und/oder Zinn, und/oder mindestens eine Legierung eines Nichteisenmetalls und/oder
- mindestens ein Leichtmetall, insbesondere Aluminium und/oder Magnesium und/oder Titan, und/oder mindestens eine Legierung eines Leichtmetalls aufweist.

16. Verfahren gemäß mindestens einem der Ansprüche 1 bis 15, **dadurch gekennzeichnet, dass** das Ersatzmaterial (20) mindestens ein Gussmaterial oder mindestens ein Nicht-Gusseisenmaterial, insbesondere mindestens ein Nicht-Gussmaterial, ist.

17. Verfahren gemäß mindestens einem der Ansprüche 1 bis 16, **dadurch gekennzeichnet,**
- **dass** das Gussmaterial im Wesentlichen Gusseisen und/oder im Wesentlichen legiertes Gusseisen, insbesondere niedrig legiertes Gusseisen und/oder hoch legiertes Gusseisen, aufweist und
- **dass** das Ersatzmaterial (20) im Wesentlichen Stahl und/oder im Wesentlichen legierten Stahl, insbesondere niedrig legierten Stahl und/oder hoch legierten Stahl, aufweist.

18. Verfahren gemäß mindestens einem der Ansprüche 1 bis 17, **dadurch gekennzeichnet,**
- **dass** das Gussmaterial im Wesentlichen Gussaluminium und/oder im Wesentlichen legiertes Gussaluminium, insbesondere niedrig legiertes Gussaluminium und/oder hoch legiertes Gussaluminium, aufweist und
- **dass** das Ersatzmaterial (20) mindestens ein Nicht-Gusseisenmaterial ist und im Wesentlichen Aluminium und/oder im Wesentlichen legiertes Aluminium, insbesondere mit Magnesium legiertes und/oder mit Silizium legiertes Aluminium, aufweist.

19. Aus mindestens einem Gussmaterial, insbesondere aus Gusseisen, gefertigter Gegenstand (100), insbesondere Bauteil, bei welchem Gegenstand (100) mindestens ein zumindest partiell fehlerhafter Bereich (10), insbesondere eine mindestens eine Beschädigung oder mindestens einen Defekt, beispielsweise mindestens eine fehlerhafte Bohrung und/oder mindestens ein fehlerhaftes Gewinde, aufweisende Fläche, nach einem Verfahren gemäß mindestens einem der Ansprüche 1 bis 18 repariert ist.

20. Verwendung mindestens einer Schutzgasmischung zum Reparaturschweißen mindestens eines zumindest partiell fehlerhaften Bereichs, insbesondere einer mindestens eine Beschädigung oder mindestens einen Defekt, beispielsweise mindestens eine fehlerhafte Bohrung und/oder mindestens ein fehlerhaftes Gewinde, aufweisenden Fläche, mindestens eines aus mindestens einem Gussmaterial, insbesondere aus Gusseisen, gefertigten Gegenstands (100), wie etwa mindestens einer Bohrung und/oder mindestens eines Gewindes des Gegenstands (100), nach einem Verfahren gemäß mindestens einem der Ansprüche 1 bis 18, **dadurch gekennzeichnet, dass** die Schutzgasmischung
- im Wesentlichen Argon und/oder eine Argon-Helium-Mischung und/oder Stickstoffmonoxid umfasst und beispielsweise des Weiteren
- oxidierende Komponenten, wie etwa
-- Kohlendioxid, insbesondere in einem Anteilsbereich von 0,5 Volumenprozent (Vol.-%) bis 25 Vol.-%, zum Beispiel von 1 Vol.-% bis 15 Vol.-%, wie etwa von 2 Vol.-% bis 10 Vol.-%, und/oder
-- Sauerstoff, insbesondere in einem Anteilsbereich von 0,5 Vol.-% bis 10 Vol.-%, zum Beispiel von 1 Vol.-% bis 3 Vol.-%, aufweisen kann.

21. Verwendung gemäß Anspruch 20, **dadurch gekennzeichnet, dass** die Schutzgasmischung 10 Vol.-% bis 60 Vol.-% Helium, insbesondere 20 Vol.-% bis 50 Vol.-% Helium, zum Beispiel 30 Vol.-% bis 40 Vol.-% Helium, enthält.
